# FASCICULE DE BREVET EUROPEEN

(11) **EP 0 921 616 B1**
(45) Date de publication et mention de la délivrance du brevet: **19.03.2003**
(21) Numéro de dépôt: 98403013.0
(22) Date de dépôt: 02.12.1998
(51) Int. Cl.: H02G 3/06, H02G 3/04

(54) **Accessoire de cheminement pour goulotte, tel que angle ou dérivation**
Kabelrinneverbindungszusatz für Eckverbindung oder Abzweigung
Cable ducting path accessory such as corner piece or cerivation

(30) Priorité: 04.12.1997 FR 9715282
(43) Date de publication de la demande: 09.06.1999
(73) Titulaire: LEGRAND, F-87000 Limoges (FR); LEGRAND SNC, F-87000 Limoges (FR)
(72) Inventeur: Buard, Yvon, 53600 Voutre (FR)
(74) Mandataire: CABINET BONNET-THIRION

(56) Documents cités:
- EP-A- 0 734 107
- FR-A- 2 731 496

## Description

La présente invention concerne d'une manière générale les goulottes du type de celles mises en oeuvre, par exemple, pour le support, le logement et la protection de divers appareillages, et, en particulier, de divers appareillages électriques, aussi bien que pour le support, le logement et la protection des conducteurs, canalisations ou autres équipements nécessaires à la desserte de ces appareillages.

Ainsi qu'on le sait, une goulotte présente, par définition, un socle, de section transversale ouverte, par lequel se fait sa fixation à une quelconque paroi, et un couvercle qui, pour la fermeture de ce socle, est à rapporter de manière amovible sur celui-ci.

Ainsi qu'on le sait, également, une telle goulotte intervient en pratique par tronçons, soit que, courant en continu suivant une même orientation sur la paroi qui la porte, sa longueur totale soit supérieure à la longueur disponible, soit que, dans l'intervalle, elle soit l'objet d'un changement d'orientation.

Ce changement d'orientation peut par exemple intervenir lorsqu'elle passe d'une première paroi à une deuxième paroi faisant un dièdre avec la précédente.

Mais il peut également intervenir à plat sur une même paroi.

Pour rétablir alors toute la continuité souhaitable, notamment du point de vue de l'isolation électrique à assurer, il est usuel de mettre en oeuvre, entre deux tronçons de goulotte successifs d'orientations différentes, un accessoire approprié, dit ici, par simple commodité, accessoire de cheminement.

Il en est de même lorsque, à l'occasion d'une dérivation, sont en jeu trois tronçons de goulotte, dont un a par nécessité une orientation différente de celle des deux autres.

La présente invention concerne plus précisément les accessoires de cheminement de ce type.

Il peut donc s'agir aussi bien de ce qui est communément appelé un "angle", tel que, par exemple, un angle intérieur, lorsque les tronçons de goulotte sont implantés sur des parois faisant entre elles un dièdre rentrant, ou un angle extérieur, lorsque ces parois font entre elles un dièdre saillant, que d'une dérivation, et, par exemple, d'une dérivation en T, cette dérivation intervenant éventuellement à l'occasion d'un quelconque des dièdres précédents.

Pour l'essentiel, les accessoires de cheminement correspondants comportent un cache propre à s'étendre entre les couvercles des différents tronçons de goulotte à raccorder, et, plus précisément, entre les ailes latérales de ces socles lorsque, de section transversale est en U, ces socles comportent un fond et deux ailes latérales.

Dans certains cas, au moins, ils comportent, également, une platine, qui est propre à s'étendre entre les socles des différents tronçons de goulotte, et, plus précisément, entre les fonds de ces socles lorsque, comme précédemment, leur section transversale est en U. C'est le cas de l'accessoire décrit dans le document FR 2731496.

La platine permet d'assurer, vis-à-vis de la ou des parois, la continuité d'isolation souhaitée.

En outre, elle assure éventuellement le positionnement des socles des différents tronçons de goulotte, en facilitant ainsi avantageusement leur mise en place.

Elle comporte, enfin, parfois, des moyens de retenue pour le cache associé, pour contribuer à la fixation de celui-ci.

Le cache, quant à lui, assure, corollairement, toute la continuité d'isolation souhaitable de l'un à l'autre des couvercles des tronçons de goulotte concernés, ainsi qu'entre les ailes latérales de leurs socles lorsque la section transversale de ceux-ci est en U.

Le plus souvent, à ce jour, et, indépendamment de moyens de retenue propres à sa fixation complémentaire à la platine, ce cache est équipé de moyens de fixation, par exemple de moyens d'encliquetage, identiques à ceux intervenant entre le couvercle d'un tronçon de goulotte et le socle de celui-ci, et il se fixe donc à ce socle de la même manière que ce couvercle, à la faveur, en pratique, de retours qu'un tel socle présente usuellement le long du bord libre de ses ailes latérales.

Or, s'ils sont bien adaptés au maintien d'un tel couvercle sur un tel socle, du fait notamment de la longueur suivant laquelle ce couvercle et ce socle sont en prise l'un avec l'autre, et du fait, également, que le couvercle ne forme usuellement pas de saillie sensible sur le socle, ces moyens de fixation le sont moins pour le maintien d'un quelconque accessoire, et, notamment, d'un quelconque accessoire de cheminement du type de ceux ici en cause.

En effet, un tel accessoire de cheminement est toujours de longueur relativement réduite, et, par rapport aux socles qu'il relie, il intervient en porte à faux de l'un à l'autre de ces socles.

En outre, il est fréquemment plus exposé aux chocs que les tronçons de goulotte eux-mêmes, et cela est notamment le cas lorsqu'il s'agit d'un angle extérieur.

Il n'est pas rare, dans ces conditions, que, à l'occasion par exemple d'un tel choc, le cache d'un tel accessoire de cheminement se désolidarise, totalement ou en partie, de l'un et/ou de l'autre des tronçons de goulotte entre lesquels il intervient.

Bien entendu, il est envisageable de durcir la fixation de ce cache, en diminuant en conséquence le jeu intervenant au niveau de son encliquetage, pour augmenter l'effort nécessaire à sa désolidarisation.

Mais, dans la pratique, cela n'est pas souhaitable, parce que, au contraire, il est souhaitable que ce cache puisse être déposé relativement aisément, notamment pour des besoins de maintenance et/ou pour assurer, si nécessaire, une modification de la configuration d'ensemble des tronçons de goulotte concernés, au fur et à mesure de l'évolution de l'installation correspondante.

Par ailleurs, la coupe des couvercles des tronçons de goulotte se faisant toujours de manière plus ou moins incertaine, il est nécessaire que, ne fût-ce que pour des raisons esthétiques, le cache de l'accessoire de cheminement mis en oeuvre recouvre ces couvercles à leur extrémité.

Il est donc nécessaire que ces couvercles soient mis en place avant ce cache.

Leur mise en place intervient de ce fait sans aucun repère de positionnement, en sorte que, au contraire de ce qui est recherché, il peut en résulter, au moins localement, une certaine lacune de leur recouvrement par le cache.

La présente invention a d'une manière générale pour objet une disposition permettant d'éviter ces divers inconvénients et conduisant en outre à d'autres avantages.

De manière plus précise, elle a pour objet un accessoire de cheminement pour goulotte, tel que revendiqué en revendication 1.

En bref, suivant l'invention, pour la fixation du cache, on prévoit, au droit de l'extrémité de chacun de ces tronçons de goulotte, un support spécifique, sur lequel le cache vient se fixer au lieu de se fixer aux socles des tronçons de goulotte, et qui, lui-même, se fixe à ces socles par des moyens d'assemblage, qui, au lieu d'être de même type que les moyens de fixation intervenant entre le couvercle d'un tronçon de goulotte et le socle de celui-ci, sont avantageusement de types différents et sont, par là, mieux adaptés.

Par exemple, suivant une forme préférée de réalisation de l'invention, ces moyens d'assemblage sont des moyens de rainure, qui sont prévus le long d'une partie au moins de la longueur de chacun des bords longitudinaux du support mis en oeuvre, et par lesquels ce support peut coopérer en emboîtement sur les retours que présentent usuellement les socles des tronçons de goulotte pour l'intervention des moyens de fixation de leur couvercle, par simple engagement sur ces retours.

Le cache et le support étant en pratique des pièces réalisées par injection, les jeux intervenant par ailleurs entre leurs moyens de réception respectifs sont avantageusement beaucoup plus faciles à maîtriser que s'il s'agissait de pièces réalisées par extrusion, comme cela est le cas en pratique des socles et couvercles des tronçons de goulotte.

Il est ainsi, suivant l'invention, avantageusement possible d'obtenir un bon compromis entre, d'une part, la facilité de montage et de démontage du cache, et, d'autre part, sa résistance à la désolidarisation lors d'un choc.

Corollairement, cela autorise avantageusement un élargissement des tolérances de fabrication pour les socles des tronçons de goulotte, en épargnant à ceux-ci la contrainte résultant de la nécessité qu'il y a actuellement de leur assujettir dans de bonnes conditions le cache des accessoires de cheminement.

Il en est d'autant plus ainsi que la tenue, sur un tel socle, du support prévu suivant l'invention peut, initialement, se faire de manière plus ou moins approximative, puisque, après la mise en place du couvercle correspondant, et du fait même de celui-ci, elle se trouve confirmée par le rapprochement relatif dont sont alors l'objet les retours correspondants du socle.

Autrement dit, le recouvrement du support suivant l'invention par le couvercle des tronçons de goulotte assure avantageusement un bon maintien à ce support, et, donc, une bonne résistance à la désolidarisation lors d'un éventuel choc.

Comme, par ailleurs, pour les raisons précédemment exposées, le maintien du cache sur ce support par les moyens de réception prévus à cet effet est lui-même assuré dans d'excellentes conditions, la disposition suivant l'invention permet avantageusement de garantir, malgré d'éventuels chocs, la pérennité du degré de protection auquel répond normalement la goulotte concernée.

Lors de la mise en place de l'ensemble, le support suivant l'invention peut par ailleurs avantageusement jouer le rôle d'une agrafe propre à assurer la retenue temporaire des conducteurs ou canalisations implantés dans les socles des tronçons de goulotte concernés, avant la mise en place de couvercles sur ceux-ci.

Il permet en outre avantageusement de disposer d'un repère pour ajuster la coupe et le positionnement de ces couvercles, en formant par lui-même un tel repère.

C'est donc avantageusement à coup sûr que le cache ultérieurement mis en place peut assurer le recouvrement recherché pour ces couvercles.

Enfin, la fixation du cache étant assurée, suivant l'invention, par un support spécifique, ce cache a par lui-même peu de fonctions techniques délicates à remplir, et il s'agit donc d'une pièce relativement simple et économique à réaliser.

Il est ainsi avantageusement envisageable, pour l'utilisateur, de changer éventuellement de cache, au gré de ses exigences, par exemple pour substituer à ce cache un autre cache présentant un aspect différent et ainsi faire évoluer l'aspect de l'ensemble.

Les caractéristiques et avantages de l'invention ressortiront d'ailleurs de la description qui va suivre, à titre d'exemple, en référence aux dessins schématiques annexés sur lesquels :
la figure 1 est, avec des arrachements locaux, une vue en perspective d'une installation comportant plusieurs tronçons de goulotte d'orientations différentes entre lesquels interviennent des accessoires de cheminement suivant l'invention ;
la figure 2 est, à échelle supérieure, une vue en perspective éclatée se rapportant à l'un de ces accessoires de cheminement ;
la figure 3 est, à l'échelle de celle de la figure 2, une vue en perspective de la platine que comporte cet accessoire de cheminement ;
la figure 4 reprend, à échelle supérieure, le détail de cette platine repéré par un encart IV sur la figure 3 ;
la figure 5 est une vue en perspective d'un des supports que comporte l'accessoire de cheminement suivant l'invention ;
la figure 6 est une autre vue en perspective de ce support ;
la figure 7 en est, à échelle différente, une vue en coupe longitudinale, suivant la ligne VII-VII de la figure 5 ;
la figure 8 en est une vue en coupe transversale, suivant la ligne VIII-VIII de la figure 6 ;
la figure 9 reprend, à échelle supérieure, le détail de la figure 8 repéré par un encart IX sur cette figure 8
la figure 10 est une vue en perspective du cache mis en oeuvre dans l'accessoire de cheminement suivant l'invention, vu de dessous ;
la figure 11 est, à échelle supérieure, une vue en coupe transversale de ce cache, suivant la ligne XI-XI de la figure 10 ;
la figure 12 reprend, à échelle encore supérieure, le détail de la figure 11 repéré par un encart XII sur cette figure 11 ;
la figure 13 est une vue en perspective de la platine d'un autre accessoire de cheminement suivant l'invention ;
la figure 14 est une vue en perspective du cache correspondant, vu de dessous ;
la figure 15 est une vue en perspective d'un adaptateur associé à ce cache, vu de l'avant ;
la figure 16 est, à échelle différente, une vue en coupe longitudinale de cet adaptateur, suivant la ligne XVI-XVI de la figure 15 ;
la figure 17 en est, à échelle également différente, une autre vue en perspective, vu de l'arrière.

Ces figures illustrent, à titre d'exemple, le cas d'une installation où une goulotte 10 court horizontalement en plinthe au pied de murs 11A, 11B, 11C successifs.

A titre d'exemple, également, et pour les seules commodités de l'exposé, les murs 11A, 11B forment, entre eux, un dièdre D saillant, tandis que les murs 11B, 11C forment, au contraire, entre eux, un dièdre D' rentrant.

L'angle de ces deux dièdres D, D' est sensiblement droit, aux tolérances de réalisation près.

La goulotte 10 comporte, en correspondance, trois tronçons de goulotte 10A, 10B, 10C successifs.

Les tronçons de goulotte 10A, 10B correspondent chacun respectivement aux murs 11A, 11B, et, au droit du dièdre D, intervient, à leur jonction, un accessoire de cheminement A du type de ceux communément appelés "angles extérieurs".

De même, le tronçon de goulotte 10C correspond au mur 11C, et, au droit du dièdre D', intervient, à sa jonction avec le tronçon de goulotte 10B, un accessoire de cheminement A' du type de ceux communément appelés "angles intérieurs".

A titre d'exemple, l'installation représentée comporte, en outre, verticalement, en dérivation par rapport à la goulotte 10, au creux du dièdre D', un tronçon de goulotte 10', qui se raccorde aux tronçons de goulotte 10B, 10C à la faveur de l'accessoire de cheminement A' assurant une jonction entre ceux-ci, avec, intervenant entre lui et cet accessoire de cheminement A', suivant des dispositions décrites plus en détail ultérieurement, un adaptateur 12.

Tous les tronçons de goulotte 10A, 10B, 10C et 10' ainsi mis en oeuvre ont, globalement, une même structure, en comportant chacun, et suivant des dispositions également décrites plus en détail ci-après, un socle 13 et un couvercle 14.

Dans l'installation représentée, la goulotte 10, et, donc, les tronçons de goulotte 10A, 10B et 10C, interviennent, à titre d'exemple, en encoignure entre les murs 11A, 11B et 11C correspondants et le sol 15 commun à tous, et, de même, le tronçon de goulotte 10' intervient en encoignure entre les murs 11B et 11C.

Le socle 13 des tronçons de goulotte 10A, 10B, 10C et 10' a donc, globalement, une section triangulaire.

Les dispositions correspondantes ne relevant pas de la présente invention, elles ne seront pas décrites en détail ici.

Pour la compréhension de l'invention, il suffira, en effet, d'indiquer, que ce socle 13 comporte, latéralement, en dièdre, deux ailes 16, que, le long de leur bord libre, ces ailes 16 forment, chacune, vers l'intérieur, un retour 18, et que, pour recevoir, par simple encliquetage, le couvercle 14 correspondant, les retours 18 ainsi présents en façade de l'ensemble, forment chacun une gouttière 19 le long de leur propre bord libre.

Dans la forme de réalisation représentée, le couvercle 14 recouvre, entièrement, à titre d'exemple, les retours 18, en s'étendant au-delà des gouttières 19 avec lesquelles il est en prise.

Il ressort de ce qui précède que les accessoires de cheminement A, A' sont destinés à établir une continuité entre au moins deux tronçons de goulotte 10A, 10B, 10C, 10' d'orientations différentes.

Si, en effet, l'accessoire de cheminement A n'intervient qu'entre deux tronçons de goulotte, en l'espèce les tronçons de goulotte 10A, 10B, l'accessoire de cheminement A' intervient, lui, entre trois tronçons de goulotte, en l'espèce les tronçons de goulotte 10B, 10C et 10'.

Chacun de ces accessoires de cheminement A, A' comporte, de manière connue en soi, une platine 20, 20', propre à s'étendre entre les socles 13 des tronçons de goulotte correspondants, et un cache 21, 21', propre à s'étendre, lui, entre leurs couvercles 14.

Suivant l'invention, chacun des accessoires de cheminement A, A' comporte, en outre, au moins un support 22a, 22b présentant, d'une part, suivant des dispositions décrites plus en détail ultérieurement, des moyens d'assemblage 23 propres à permettre de le rapporter sur le socle 13 d'un des tronçons de goulotte concernés, en l'espèce l'un des tronçons de goulotte 10A, 10B ou 10C, et, d'autre part, et suivant des dispositions également décrites plus en détail ultérieurement, des moyens de réception 24 propres à permettre d'y assujettir le cache 21, 21' correspondant.

Dans les formes de réalisation représentées, le cache 21, 21' des accessoires de cheminement A, A' suivant l'invention comporte, de manière symétrique, au moins deux pans 25a, 25b, dits, ici, par simple commodité, pans d'extrémité.

S'agissant d'un angle extérieur, le cache 21 de l'accessoire de cheminement A se réduit en pratique à ces deux pans d'extrémité 25a, 25b.

Il en est de même pour un angle intérieur.

S'agissant, cependant, d'un angle intérieur avec dérivation, tel que représenté, le cache 21' de l'accessoire de cheminement A' comporte trois pans, à savoir, de manière également symétrique, deux pans d'extrémité 25'a, 25'b et un pan intermédiaire 26.

Dans la forme de réalisation représentée, et suivant des dispositions qui, ne relevant pas de la présente invention, ne seront pas décrites en détail ici, les pans d'extrémité 25a, 25b de l'accessoire de cheminement A sont reliés en continu l'un à l'autre par une zone charnière 27, et, de même, les pans d'extrémité 25'a, 25'b et le pan intermédiaire 26 de l'accessoire de cheminement A' sont reliés en continu deux à deux par des zones charnières 27.

Quoi qu'il en soit, chacun des accessoires de cheminement A, A' suivant l'invention comporte, dans la forme de réalisation représentée, pour un même cache 21, 21', deux supports 22a, 22b, à raison d'un par pan d'extrémité 25a, 25'a, 25b, 25'b.

Ces deux support 22a, 22b sont les mêmes pour l'un et l'autre des accessoires de cheminement A, A'.

Tout en étant symétriques l'un de l'autre, ils ont en outre l'un et l'autre une même configuration.

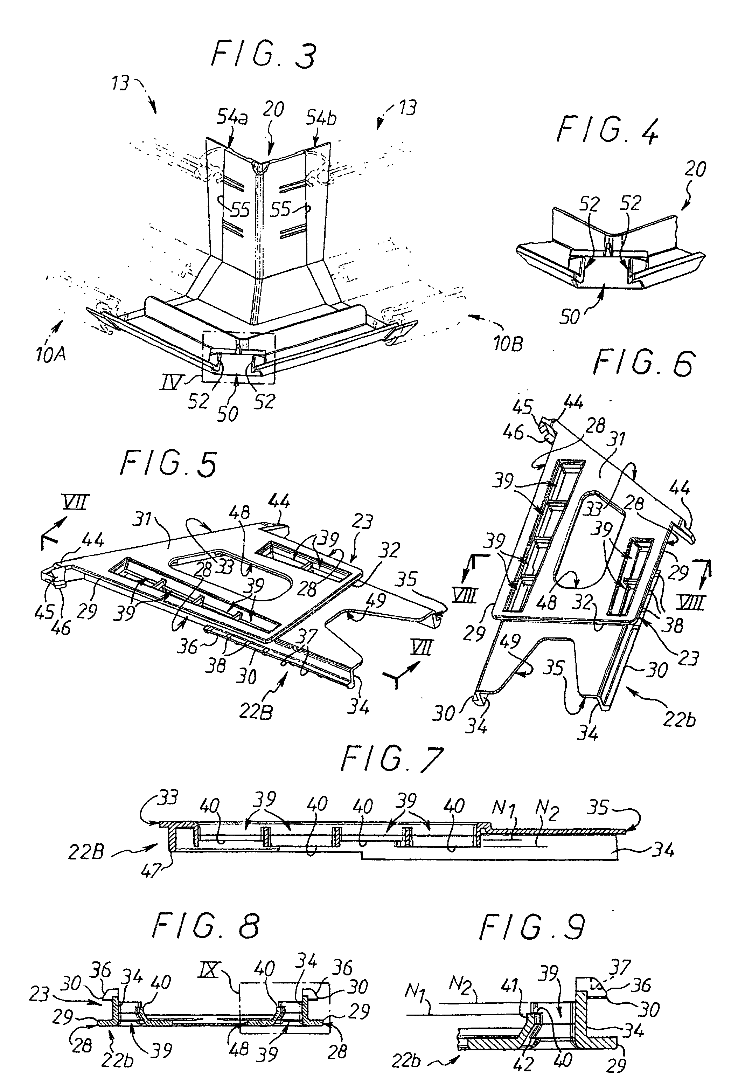

Seul, donc, l'un de ces supports 22a, 22b, en l'espèce le support 22b, sera décrit en détail dans ce qui suit, en référence aux figures 5 à 9.

Dans la forme de réalisation représentée, ce support 22b présente deux bords longitudinaux 28 parallèles, et les moyens d'assemblage 23 qu'il comporte sont des moyens de rainure prévus le long d'une partie au moins de la longueur de chacun de ces bords longitudinaux 28.

Plus précisément, dans cette forme de réalisation, le support 22b se présente sous la forme générale d'une plaquette, et les moyens de rainure formant ses moyens d'assemblage 23 s'étendent dos à dos sur la tranche de ces bords longitudinaux 28.

Plus précisément, encore, le long de chacun des bords longitudinaux 28 du support 22b, les moyens de rainure formant les moyens d'assemblage 23 que comporte ce support 22b sont formés entre deux rebords 29, 30, l'un supérieur, l'autre inférieur, qui, sensiblement parallèles l'un à l'autre, font saillie latéralement vers l'extérieur.

Dans la forme de réalisation représentée, les rebords 29, 30 ne s'étendent chacun que sur une partie de la longueur des bords longitudinaux 28 du support 22b, et, tout en se surplombant l'un l'autre sur une partie au moins de leur propre longueur, ils sont décalés longitudinalement l'un par rapport à l'autre.

Le rebord supérieur 29 est à niveau avec la surface supérieure 31 du support 22b, en continuité avec celle-ci.

Mais, dans la forme de réalisation représentée, la surface supérieure 31 du support 22b s'étend elle-même suivant deux niveaux, un niveau supérieur à l'avant, et un niveau inférieur à l'arrière, avec, à la jonction entre ces deux niveaux, un décrochement 32, qui s'étend transversalement par rapport à l'ensemble, c'est-à-dire perpendiculairement aux bords longitudinaux 28, et dont la hauteur est au moins égale à l'épaisseur du couvercle 14 des tronçons de goulotte 10A, 10B, 10C.

Par suite, dans la forme de réalisation représentée, le rebord supérieur 29 des moyens de rainure formant les moyens d'assemblage 23 ne s'étend que sur la partie de la longueur des bords longitudinaux 28 du support 22b correspondant à la partie de niveau supérieur de la surface supérieure 31 de celui-ci.

En pratique, dans la forme de réalisation représentée, ce rebord supérieur 29 s'étend à compter du bord transversal avant 33 du support 22b.

Corollairement, dans la forme de réalisation représentée, le support 22b présente un bord tombé 34 le long de chacun de ses bords longitudinaux 28, sur une partie au moins de la longueur de ceux-ci, et, en pratique, sur la totalité de cette longueur, et le rebord inférieur 30 des moyens de rainure formant ses moyens d'assemblage 23 forme, pour un tel bord tombé 34, un retour en équerre dirigé vers l'extérieur.

En pratique, dans la forme de réalisation représentée, le rebord inférieur 30 s'étend à compter du bord transversal arrière 35 du support 22b.

Préférentiellement, et cela est le cas dans la forme de réalisation représentée, la tranche de ce rebord inférieur 30 est biseautée par un chanfrein 36.

Pour un allégement de l'ensemble, aussi bien que pour des questions de moulage, le rebord inférieur 30 peut, tel que représenté, présenter, de place en place, en creux sur sa tranche, des dégagements 37, figures 5 et 9.

Préférentiellement, et cela est le cas dans la forme de réalisation représentée, l'un au moins des rebords 29, 30 présente, transversalement, en saillie sur sa surface interne, c'est-à-dire en saillie sur celle de ses surfaces qui est tournée vers l'autre rebord 29, 30, au moins une nervure 38 propre à former frein.

Par exemple, et tel que représenté, plusieurs nervures 38 sont ainsi prévus de place en place sur le rebord inférieur 30, le long de la partie de celui-ci surplombée par le rebord supérieur 29, et, corollairement, ce rebord supérieur 29 est, lui, lisse.

Dans la forme de réalisation représentée, les moyens de réception 24 prévus par ailleurs sur le support 22b pour permettre d'y assujettir un cache 21, 21' comportent au moins un évidement d'encliquetage 39 à la faveur duquel intervient, au moins localement, un cran d'accrochage 40.

Préférentiellement, et cela est le cas dans la forme de réalisation représentée, ces moyens de réception 24 comportent au moins deux évidements d'encliquetage 39, qui sont alignés l'un avec l'autre, parallèlement aux bords longitudinaux 28 du support 22b, et dont les crans d'accrochage 40 sont établis à des niveaux N1, N2 différents, l'un supérieur, l'autre inférieur.

Par exemple, et tel que représenté, il y a un alignement d'au moins deux évidements d'encliquetage 39 le long de chacun des deux bords longitudinaux 28 du support 22b.

Mais, dans la forme de réalisation représentée, le bord transversal avant 33 du, support 22b s'étend en oblique par rapport à ses bords longitudinaux 28, suivant un angle qui est sensiblement égal à 45°.

Par suite, il n'y a, le long du bord longitudinal 28 le plus court, que deux évidements d'encliquetage 39, dont les crans d'accrochage 40 sont établis à des niveaux N1, N2 différents.

Corollairement, il y a, le long du bord longitudinal 28 le plus long, quatre évidements d'encliquetage 39, dont les crans d'accrochage 40 sont alternativement établis à des niveaux N1, N2 différents.

En pratique, dans la forme de réalisation représentée, tous ces évidements d'encliquetage 39 n'affectent que la partie de niveau supérieur de la surface supérieure 31 du support 22b.

Ils ont en outre tous une configuration de même type.

Dans la forme de réalisation représentée, ces évidements d'encliquetage 39 ont, en plan, un contour allongé en boutonnière sensiblement parallèlement aux bords longitudinaux 28 du support 22b.

Mais, du bord transversal avant 33 du support 22b à son bord transversal arrière 35, le contour des évidements d'encliquetage 39 va en se rétrécissant, et, pour les évidements d'encliquetage 39 d'un même alignement, ce contour s'inscrit dans un contour plus général commun à l'ensemble d'un tel alignement.

En pratique, également, les évidements d'encliquetage 39 sont tous conformés en puits sans fond, dont le bord tombé 34 correspondant, commun à tous, forme pour chacun une paroi longitudinale, et le cran d'accrochage 40 associé est formé par la tranche d'une paroi longitudinale 41, qui, opposée à la précédente, est également commune à l'ensemble des évidements d'encliquetage 39 d'un même alignement, mais dont la hauteur est différente de l'un à l'autre de ceux-ci suivant le niveau N1, N2 où se situe ce cran d'accrochage 40.

Préférentiellement, le cran d'accrochage 40 est précédé par un chanfrein d'engagement 42, et, dans la forme de réalisation représentée, ce chanfrein d'engagement 42 résulte d'une conformation en oblique de la paroi longitudinale 41 à son débouché sur la surface supérieure 31 du support 22b.

Dans la forme de réalisation représentée, le support 22b comporte, en saillie, latéralement, à l'une au moins des extrémités de son bord transversal avant 33, une patte 44.

Par exemple, et tel que représenté, il comporte, latéralement, en saillie, une telle patte 44 à chacune des extrémités de son bord transversal avant 33.

Les deux pattes 44 sont en alignement l'une avec l'autre, en continuité avec la tranche avant du bord transversal avant 33 du support 22b.

La patte 44 située du côté du bord longitudinal 28 le plus long du support 22b est conformée en crochet à son extrémité libre.

Autrement dit, elle présente, à cette extrémité libre, un retour 45 dirigé parallèlement aux bords longitudinaux 28 du support 22b.

Corollairement, dans la forme de réalisation représentée, cette même patte 44 comporte un retour en équerre 46 le long d'un de ses bords, et, plus précisément, le long de son bord inférieur, sensiblement à mi-longueur de celui-ci.

La patte 44 située du côté du bord longitudinal 28 le plus court du support 22b est au contraire lisse.

En pratique, dans la forme de réalisation représentée, le support 22b comporte, parallèlement à son bord transversal avant 33, mais légèrement en retrait par rapport à celui-ci, un bord tombé 47, qui est à niveau avec les bords tombés 34 prévus le long de ses bords longitudinaux 28, et dont les extrémités forment les pattes 44.

Dans la forme de réalisation représentée, le support 22b comporte, localement, au moins un ajour 48.

Par exemple, et tel que représenté, seul un tel ajour 48 est prévu, et il affecte la zone médiane de la partie de niveau supérieur de la surface supérieure 31 du support 22b.

Enfin, dans la forme de réalisation représentée, le support 22b comporte au moins une échancrure 49.

Par exemple, et tel que représenté, seule une échancrure 49 est prévue le long de son bord transversal arrière 35, et cette échancrure 49 s'étend très largement sur la partie de niveau inférieur de sa surface supérieure 31.

La distance séparant l'un de l'autre les rebords 29, 30 des moyens de rainure formant les moyens d'assemblage 23 du support 22b est sensiblement égale à l'épaisseur des retours 18 des ailes 16 du socle 13 des tronçons de goulotte 10A, 10B, 10C, en sorte que ce support 22b peut être rapporté sur un tel socle 13 par simple emboîtement sur les retours 18 de ce socle 13, moyennant une déformation élastique locale temporaire des ailes 16 de celui-ci.

Comme déjà précédemment indiqué, le support 22a a une constitution analogue à celle du support 22b.

Seul change le sens d'inclinaison de son bord transversal avant 33 par rapport à ses bords longitudinaux 28.

Pour coopération avec la patte 44 conformée en crochet de ces supports 22a, 22b, la platine 20, 20' des accessoires de cheminement A, A' suivant l'invention comporte, latéralement, deux becs de retenue 52.

S'agissant d'une platine pour angle extérieur, ces becs de retenue 52 interviennent en bordure d'un évidement 50 affectant la partie saillante de la platine 20, figures 3 et 4.

Il en est sensiblement de même pour une platine pour angle intérieur, non représentée.

Lorsque, comme représenté, un angle intérieur est mis à profit pour l'établissement d'une dérivation, la platine 20' peut, si désiré, être optimisée, dans le but, notamment, d'augmenter le volume utilisable pour le passage des conducteurs électriques.

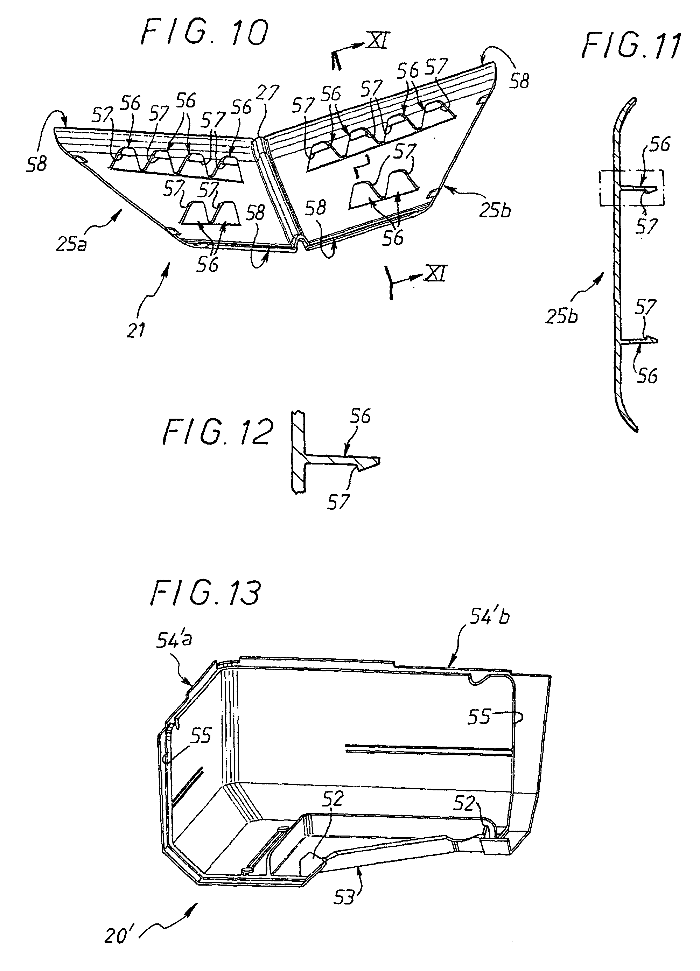

Comme représenté, figure 13, la partie saillante de cette platine 20' peut par exemple être sensiblement élargie, en formant une avancée 53, et les becs de retenue 52 sont alors disposés sur cette avancée 53, en étant reportés aux extrémités de celle-ci.

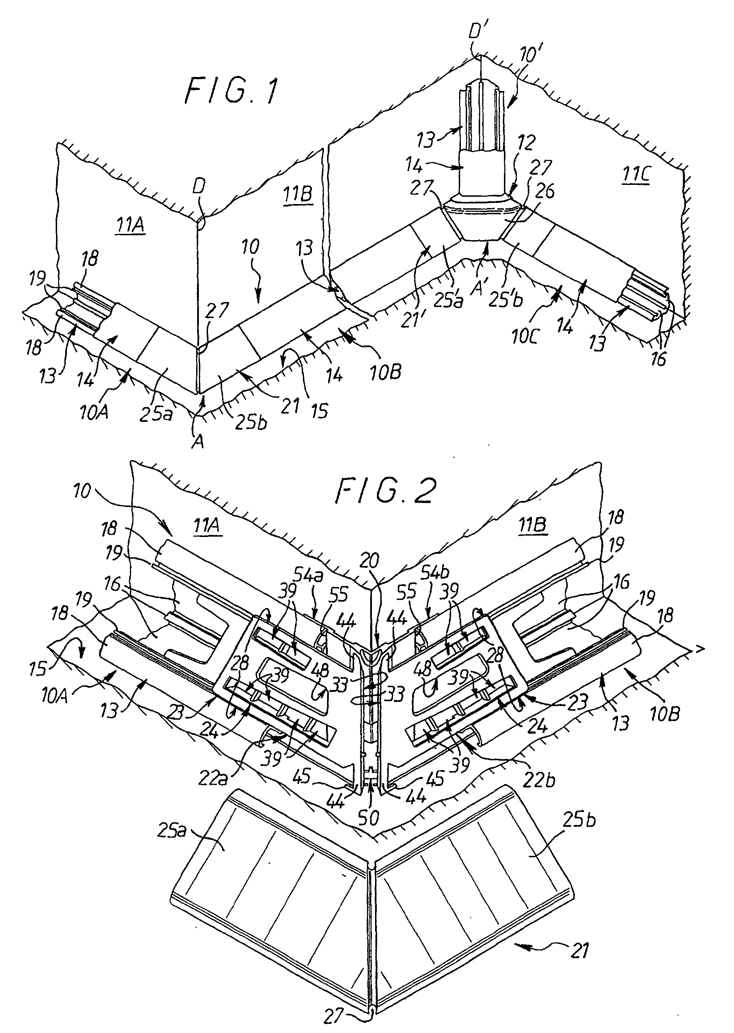

Pour le reste, les platines 20, 20' des accessoires de cheminement A, A' suivant l'invention ont des configurations similaires : elles présentent chacune, de manière symétrique, deux bras 54a, 54'a, 54b, 54'b, dont le profil est globalement à l'image de celui du socle 13 des tronçons de goulotte 10A, 10B, 10C, et qui présentent au voisinage de leur extrémité, un décrochement 55, pour leur engagement sous un tel socle 13, tel que représenté en traits continus sur la figure 2 pour la platine 20 et tel que schématisé en traits interrompus sur la figure 3 pour cette même platine 20.

Bien entendu, les bras 54a, 54b de la platine 20 forment, globalement, entre eux, un dièdre obtus, dont l'angle est sensiblement égal à 270°, et les bras 54'a, 54'b de la platine 20' forment, au contraire, entre eux, un dièdre aigu, dont l'angle est sensiblement égal à 90°.

Pour chacun des accessoires de cheminement A, A' suivant l'invention, fait saillie, sur la surface inférieure de chacun des pans d'extrémité 25a, 25'a, 25b, 25'b du cache 21, 21', au moins une patte d'encliquetage 56, qui est élastiquement déformable, et qui présente, transversalement, un cran d'accrochage 57, pour coopération avec un cran d'accrochage 40 de l'un ou de l'autre des supports 22a, 22b.

Préférentiellement, et cela est le cas dans la forme de réalisation représentée, font ainsi saillie, sur la surface inférieure de chacun des pans d'extrémité 25a, 25'a, 25b, 25'b des caches 21, 21', au moins deux pattes d'encliquetage 56, qui sont alignées l'une avec l'autre, sensiblement parallèlement aux bords longitudinaux 58 d'un tel pan d'extrémité 25a, 25'a, 25b, 25'b, et dont les crans d'accrochage 57 sont tous établis à un même niveau.

Dans la forme de réalisation représentée, il y a un alignement d'au moins deux pattes d'encliquetage 56 le long de chacun des bords longitudinaux 58 de chacun des pans d'extrémité 25a, 25'a, 25b, 25'b des caches 21, 21'.

S'agissant d'un angle extérieur, le cache 21 de l'accessoire de cheminement A comporte, ainsi, deux pattes d'encliquetage 56 d'un côté, et quatre de l'autre, à la manière des évidements d'encliquetage 39 des supports 22a, 22b.

Mais, s'agissant d'un angle intérieur, le cache 21' de l'accessoire de cheminement A' ne comporte, lui, que deux pattes d'encliquetage 56 de chaque côté.

En outre, au lieu d'être rigoureusement parallèles l'un à l'autre, les alignements formés par ces pattes d'encliquetage 56 sur un même pan d'extrémité 25a, 25'a, 25b, 25'b sont légèrement convergents l'un avec l'autre, à la manière du contour général dans lequel s'inscrivent les contours des évidements d'encliquetage 39 d'un même alignement sur les supports 22a, 22b, afin de favoriser un positionnement longitudinal correct d'un cache 21, 21' sur de tels supports 22a, 22b.

A la manière du couvercle 14 des tronçons de goulotte 10A, 10B, 10C, les pans d'extrémité 25a, 25'a, 25b, 25'b des caches 21, 21' ont, transversalement, une extension suffisante pour recouvrir entièrement les retours 18 du socle 13 de ces tronçons de goulotte 10A, 10C, 10C.

Comme déjà précédemment indiqué, un adaptateur 12 est associé au cache 21' de l'accessoire de cheminement A'.

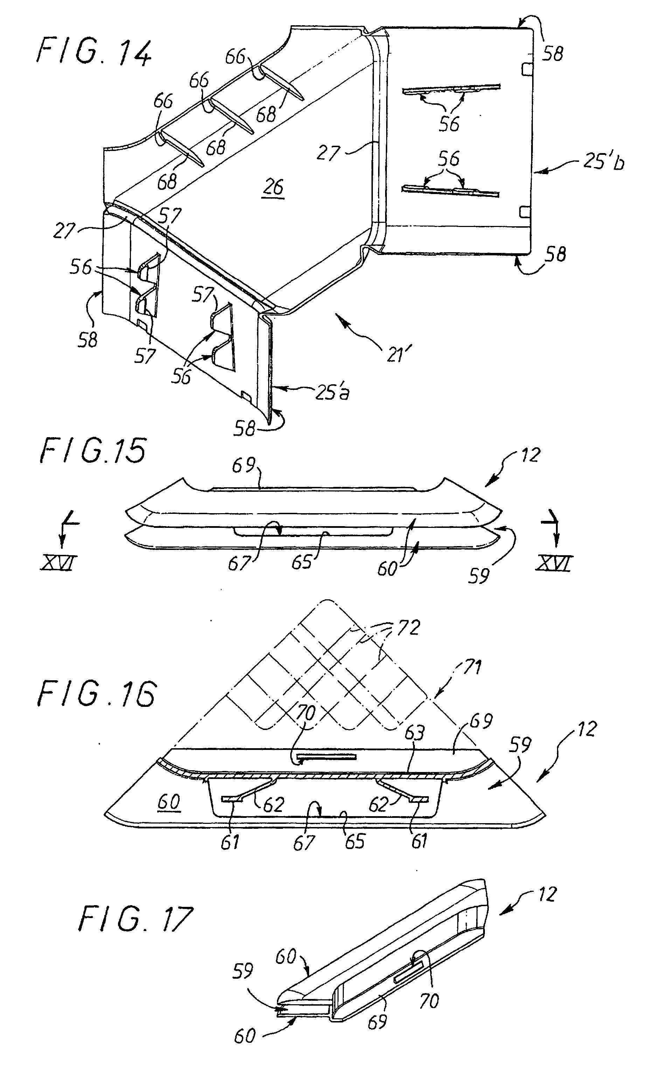

Par une fente 59 formée par deux lèvres 60 sensiblement parallèles l'une à l'autre, cet adaptateur 12 est adapté à être engagé sur le pan intermédiaire 26 de ce cache 21', et, préférentiellement, il comporte, dans cette fente 59, ainsi qu'il est mieux visible sur la figure 16, au moins un patin 61, qui, porté par une languette élastiquement déformable 62, est destiné à venir porter contre la tranche de ce pan intermédiaire 26.

Par exemple, et tel que représenté, deux patins 61 sont prévus, chacun au bout d'une languette élastiquement déformable 62, et celle-ci fait saillie sur le fond 63 de la fente 59, en s'étendant en oblique par rapport à ce fond 63.

Dans la forme de réalisation représentée, l'adaptateur 12 comporte, intérieurement, au moins un cran 65, et, corollairement, le cache 21' comporte, en saillie sur la surface intérieure de son pan intermédiaire 26, pour coopération avec le cran 65 précédent, au moins un cran 66.

Par exemple, et tel que représenté, le cran 65 s'étend longitudinalement, et il est formé par la tranche d'un évidement 67, qui s'étend au droit des patins 61 et des languettes élastiquement déformables 62, pour faciliter la réalisation de ceux-ci, et qui, éventuellement, est fractionné en deux évidements, à raison d'un par patin 61 et par languette élastiquement déformable 62.

Corollairement, et tel que représenté, plusieurs crans 66 sont prévus sur le cache 21', et, plus précisément, sur le pan intermédiaire 26 de celui-ci, en étant chacun disposés au bout d'une nervure 68 qui s'étend transversalement par rapport à la direction d'allongement de ce pan intermédiaire 26.

Dans la forme de réalisation représentée, l'adaptateur 12 comporte, en outre, extérieurement, au dos de sa fente 59, en saillie sur une languette 69 qui le borde sur une partie au moins de sa longueur, et, en pratique, sur la totalité de celle-ci, au moins un cran 70, allongé longitudinalement.

Ce cran 70 est destiné à contrebuter le couvercle 14 du tronçon de goulotte 10'.

Il est donc établi à distance du fond 63 de la fente 59, et la languette 69 qui le porte est en retrait par rapport à la lèvre 60 supérieure de l'adaptateur 12.

En pratique, dans la forme de réalisation représentée, cette languette 69 s'étend au-delà de la lèvre 60 inférieure de l'adaptateur 12 par rapport à la lèvre 60 supérieure de celui-ci.

Préférentiellement, et tel que schématisé en traits interrompus sur la figure 16, l'adaptateur 12 comporte, extérieurement, au dos de sa fente 59, et sensiblement parallèlement aux lèvres 60 de celle-ci, un flasque d'occultation 71, pour le cas où aucune dérivation n'est à établir à son niveau.

En pratique, dans la forme de réalisation représentée, le flasque d'occultation 71 est dans le prolongement de la languette 69, tout en pouvant être détaché de celle-ci.

En pratique, également, ce flasque d'occultation 71 a, en plan, un contour triangulaire, à l'image du profil du socle 13 du tronçon de goulotte 10'.

Préférentiellement, et tel que schématisé par des traits interrompus sur la figure 16, le flasque d'occultation 71 comporte un réseau de lignes de prédécoupage 72, pour l'implantation éventuelle d'une dérivation présentant transversalement un profil différent de celui du tronçon de goulotte 10'.

Ainsi qu'il est aisé de le comprendre, pour la mise en place d'un accessoire de cheminement A, A' suivant l'invention, il convient, tout d'abord, de disposer, au droit du dièdre D, D' concerné, la platine 20, 20' correspondante.

Il convient, ensuite, de mettre en place le socle 13 des tronçons de goulotte 10A, 10B, 10C et 10', en recouvrant, par le socle 13 des tronçons de goulotte 10A, 10B, 10C, les extrémités des bras 54a, 54'a, 54b, 54'b de la platine 20, 20'.

Il convient, enfin, de rapporter sur les retours 18 des socles 13 ainsi mis en place, pour chacun des dièdres D, D', deux supports 22a, 22b, en emboîtant ces supports 22a, 22b sur ces retours 18, à la faveur des moyens de rainure formant les moyens d'assemblage 23 correspondants, et en les crochetant par leurs pattes 44 sur la platine 20, 20' concernée, à la faveur, notamment, des becs de retenue 52 prévus à cet effet sur celle-ci.

Il suffit, ensuite, de mettre en place un couvercle 14 sur chacun des socles 13, en recouvrant par un tel couvercle 14 la partie de niveau inférieur de la surface supérieure 31 du support 22a, 22b concerné.

Ainsi qu'on le notera, les supports 22a, 22b suivant l'invention servent alors avantageusement de repères pour la découpe des couvercles 14 à la bonne longueur.

Il suffit, enfin, de rapporter, pour chacun des dièdres D, D', un cache 21, 21' sur les supports 22a, 22b correspondants, par simple encliquetage de ce cache 21, 21' sur ces supports 22a, 22b, à la faveur des évidements d'encliquetage 39 formant les moyens de réception 24 correspondants.

Lors d'un tel encliquetage, il y a, le long de chacun des bords longitudinaux 58 de chacun des pans d'extrémité 25a, 25'a, 25b, 25'b des caches 21, 21', au moins une patte d'encliquetage 56 qui, par son cran d'accrochage 57, vient en prise avec le cran d'accrochage 40 de l'évidement d'encliquetage 39 correspondant du support 22a, 22b concerné.

Si, dans ce qui précède, il a été prévu que le couvercle 14 des tronçons de goulotte 10A, 10B, 10C, et, donc, les caches 21, 21' qui viennent en continuité avec un tel couvercle 14, recouvrent entièrement les retours 18 du socle 13 de ces tronçons de goulotte 10A, 10B, 10C, il n'en est pas nécessairement ainsi.

Au contraire, le couvercle 14 des tronçons de goulotte 10A, 10B, 10C, et, donc, les caches 21, 21', peuvent ne s'étendre, transversalement, que de l'un à l'autre des retours 18, en étant alors à niveau avec ces retours 18 au lieu d'être en surépaisseur sur ceux-ci.

C'est pour tenir compte de la différence de hauteur qui en résulte que les crans d'accrochage 40 prévus sur les supports 22A, 22B sont établis à des niveaux N1, N2 différents.

Dans un cas, seuls interviennent les crans d'accrochage 40 de niveau N1 supérieur, et, dans l'autre, seuls interviennent les crans d'accrochage 40 de niveau N2 inférieur.

Mais, dans l'un et l'autre cas, les supports 22a, 22b restent avantageusement les mêmes, ce qui limite les fabrications et les références à gérer.

Bien entendu la présente invention ne se limite d'ailleurs pas aux formes de réalisation et/ou de mise en oeuvre décrites et représentées, mais englobe toute variante d'exécution.

En particulier, il va de soi qu'il n'est pas nécessairement associé une dérivation à un angle intérieur, et que, au contraire, un tel angle intérieur peut intervenir isolément, et/ou qu'une telle dérivation peut être prévue n'importe où, en pleine surface, à distance notamment de tout angle intérieur.

En outre, si, par mesure de commodité, les tronçons de goulotte décrits ont été représentés implantés en plinthe, au ras du sol, il va de soi qu'ils peuvent tout aussi bien être implantés en corniche, au ras du plafond.

## Revendications

1. Accessoire de cheminement pour goulotte, tel qu'un angle ou dérivation, destiné à établir une continuité entre au moins deux tronçons de goulotte d'orientations différentes comportant chacun un socle (13) et un couvercle (14), cet accessoire de cheminement comportant un cache (21, 21') d'un seul tenant propre à s'étendre entre leurs couvercles (14) et deux supports (22a, 22b), à raison d'un par tronçon de goulotte, chacun de ces deux supports (22a, 22b) présentant des moyens de réception (24) propres à permettre d'y assujettir un pan d'extrémité (25a, 25'a, 25b, 25'b) du cache (21, 21'), **caractérisé en ce que** chacun de ces deux supports (22a, 22b) présente, en outre, des moyens d'assemblage (23) propres à permettre de le rapporter par emboîtement sur les retours (18) des ailes latérales (16) du socle (13) d'un tronçon de goulotte correspondant de sorte que ledit support (22a, 22b) se positionne au-dessus du fond dudit socle (13).

2. Accessoire de cheminement suivant la revendication 1, caractérlsé en ce que chaque support (22a, 22b) présente deux bords longitudinaux (28) parallèles, et les moyens d'assemblage (23) qu'il comporte sont des moyens de rainure prévus le long d'une partie au moins de la longueur de chacun de ces bords longitudinaux (28).

3. Accessoire de cheminement suivant la revendication 2, **caractérisé en ce que** chaque support (22a, 22b) se présente sous la forme générale d'une plaquette, et les moyens de rainure formant ses moyens d'assemblage (23) s'étendent dos à dos sur la tranche de ses bords longitudinaux (28).

4. Accessoire de cheminement suivant la revendication 3, **caractérisé en ce que**, le long de chacun des bords longitudinaux (28) de chaque support (22a, 22b), les moyens de rainure formant les moyens d'assemblage (23) que comporte ce support (22a, 22b) sont formés entre deux rebords (29, 30), l'un supérieur, l'autre inférieur, qui, sensiblement parallèles l'un à l'autre, font saillie latéralement vers l'extérieur.

5. Accessoire de cheminement suivant la revendication 4, **caractérisé en ce que** le rebord supérieur (29) est à niveau avec la surface supérieure (31) de chaque support (22a, 22b), en continuité avec celle-ci.

6. Accessoire de cheminement suivant l'une quelconque des revendications 4, 5, **caractérisé en ce que** chaque support (22a, 22b) présente un bord tombé (34) le long de chacun de ses bords longitudinaux (28), sur une partie au moins de la longueur de ceux-ci, et le rebord inférieur (30) forme un retour en équerre pour tel un bord tombé (34).

7. Accessoire de cheminement suivant l'une quelconque des revendications 4 à 6, **caractérisé en ce que** la tranche du rebord inférieur (30) est biseautée par un chanfrein (36).

8. Accessoire de cheminement suivant l'une quelconque des revendications 4 à 7, **caractérisé en ce que** l'un au moins des rebords (29, 30) présente, transversalement, en saillie sur sa surface inteme, c'est-à-dire sur celle de ses surfaces qui est tournée vers l'autre rebord (29, 30), au moins une nervure (38).

9. Accessoire de cheminement suivant l'une quelconque des revendications 4 à 8, **caractérisé en ce que** les rebords (29, 30) ne s'étendent que sur une partie de la longueur des bords longitudinaux (28) de chaque support (22a, 22b), et, tout en se surplombant l'un l'autre sur une partie au moins de leur propre longueur, ils sont décalés longitudinalement l'un par rapport à l'autre.

10. Accessoire de cheminement suivant l'une quelconque des revendications 1 à 9, **caractérisé en ce que** les moyens de réception (24) prévus sur chaque support (22a, 22b) comportent au moins un évidement d'encliquetage (39) à la faveur duquel intervient, au moins localement, un cran d'accrochage (40).

11. Accessoire de cheminement suivant la revendication 10, **caractérisé en ce que** le cran d'accrochage (40) est précédé par un chanfrein d'engagement (42).

12. Accessoire de cheminement suivant l'une quelconque des revendications 10, 11, **caractérisé en ce que** l'évidement d'encliquetage (39) a, en plan, un contour allongé en boutonnière sensiblement parallèlement aux bords longitudinaux (28) du support (22a, 22b).

13. Accessoire de cheminement suivant l'une quelconque des revendications 10 à 12, cacactérisé en ce que les moyens de réception (24) prévus sur chaque support (22a, 22b) comportent au moins deux évidements d'encliquetage (39), qui sont alignés l'un avec l'autre parallèlement aux bords longitudinaux (28) de ce support (22a, 22b), et dont les crans d'accrochage (40) sont établis à des niveaux (N1, N2) différents.

14. Accessoire de cheminement suivant la revendication 13, **caractérisé en ce qu'**il y a un alignement d'au moins deux évidements d'encliquetage (39) le long de chacun des bords longitudinaux (28) de chaque support (22a, 22b).

15. Accessoire de cheminement suivant l'une quelconque des revendications 1 à 14, **caractérisé en ce que** le bord transversal avant (33) de chaque support (22a, 22b) s'étend en oblique par rapport à ses bords longitudinaux (28).

16. Accessoire de cheminement suivant l'une quelconque des revendications 1 à 15, **caractérisé en ce que** chaque support (22a, 22b) comporte, en saillie, latéralement, à l'une au moins des extrémités de son bord transversal avant (33), une patte (44).

17. Accessoire de cheminement suivant la revendication 16, **caractérisé en ce que** chaque support (22a, 22b) comporte, en saillie, une patte (44) à chacune des extrémités de son bord transversal avant (33).

18. Accessoire de cheminement suivant l'une quelconque des revendications 16, 17, **caractérisé en ce que** la patte (44) est conformée en crochet

19. Accessoire de cheminement suivant l'une quelconque des revendications 16 à 18, **caractérisé en ce que** la patte (44) comporte un retour en équerre (46) le long d'un de ses bords.

20. Accessoire de cheminement suivant l'une quelconque des revendications 1 à 19, **caractérisé en ce que** la surface supérieure (31) de chaque support (22a, 22b) s'étend suivant deux niveaux, un niveau supérieur à l'avant, et un niveau inférieur à l'arrière.

21. Accessoire de cheminement suivant l'une quelconque des revendications 1 à 20, **caractérisé en ce que** chaque support (22a, 22b) comporte, localement, au moins un ajour (48).

22. Accessoire de cheminement suivant l'une quelconque des revendications 1 à 21, **caractérisé en ce que** chaque support (22a, 22b) comporte au moins une échancrure (49).

23. Accessoire de cheminement suivant l'une quelconque des revendications précédentes, **caractérisé en ce que**, s'agissant d'un angle intérieur avec dérivation, le cache (21') comporte trois pans, à savoir deux pans d'extrémité (25'a, 25'b) et un pan intermédiaire (26).

24. Accessoire de cheminement suivant l'une quelconque des revendications précédentes, **caractérisé en ce que** sur la surface inférieure de chacun des pans d'extrémité (25a, 25'a, 25b, 25'b) du cache (21, 21') fait saillie au moins une patte d'encliquetage (56), qui est élastiquement déformable, et qui présente, transversalement, un cran d'accrochage (57).

25. Accessoire de cheminement suivant la revendication 24, **caractérisé en ce que**, sur la surface inférieure de chacun des pans d'extrémité (25a, 25'a, 25b, 25'b) du cache (21, 21') font saillie au moins deux pattes d'encliquetage (56), qui sont alignées l'une avec l'autre parallèlement aux bords longitudinaux (58) d'un tel pan d'extrémité (25a, 25'a, 25b, 25'b), et dont les crans d'accrochage (57) sont tous établis à un même niveau.

26. Accessoire de cheminement suivant la revendication 25, **caractérisé en ce qu'**il y a un alignement d'au moins deux pattes d'encliquetage (56) le long de chacun des bords longitudinaux (58) de chacun des pans d'extrémité (25a, 25'a, 25b, 25'b) du cache (21, 21').

27. Accessoire de cheminement suivant l'une quelconque des revendications précédentes, **caractérisé en ce que** les deux supports (22a, 22b) sont symétriques l'un de l'autre.

28. Accessoire de cheminement suivant la revendication 23, **caractérisé en ce que**, au cache (21'), est associé un adaptateur (12), qui, par une fente (59) formée par deux lèvres (60) parallèles, est adapté à être engagé sur le pan intermédiaire (26) de ce cache (21').

29. Accessoire de cheminement suivant la revendication 28, **caractérisé en ce que**, dans sa fente (59), l'adaptateur (12) comporte au moins un patin (61), qui, porté par une languette élastiquement déformable (62), est destiné à venir porter contre la tranche du pan intermédiaire (26) du cache (21').

30. Accessoire de cheminement suivant l'une quelconque des revendications 28, 29, **caractérisé en ce que** l'adaptateur (12) comporte, au dos de sa fente (59), en saillie sur une languette (69) qui le borde sur une partie au moins de sa longueur, au moins un cran (70).

31. Accessoire de cheminement suivant l'une quelconque des revendications 28 à 30, **caractérisé en ce que** l'adaptateur (12) comporte, au dos de sa fente (59), un flasque d'occultation (71).

32. Accessoire de cheminement suivant la revendication 31, **caractérisé en ce que** le flasque d'occultation (71) de l'adaptateur (12) comporte un réseau de lignes de prédécoupage (72).

33. Accessoire de cheminement suivant les revendications 30 et 31, prises conjointement, **caractérisé en ce que** le flasque d'occultation (71) de l'adaptateur (12) est dans le prolongement de sa languette (69).

34. Accessoire de cheminement suivant l'une quelconque des revendications 1 à 33, **caractérisé en ce que**, une platine (20, 20') propre à s'étendre entre les socles (13) des différents tronçons de goulotte étant prévue, cette platine (20, 20') comporte, latéralement, deux becs de retenue (52).

## Claims

1. A continuation accessory for a duct such as an angle member or a branch member intended to establish continuity between at least two duct portions involving different orientations each comprising a base (13) and a cover (14), the continuation accessory comprising a covering portion (21, 21') in one piece for extending between their covers (14) and two supports (22a, 22b) with one per duct portion, each of said two supports (22a, 22b) having receiving means (24) for permitting an end surface portion (25a, 25'a, 25b, 25'b) of the covering portion (21, 21') to be fixed thereto **characterised in that** each of said two supports (22a, 22b) also has assembly means (23) for permitting it to be fitted by interengagement on the flanges (18) of the lateral limbs (16) of the base (13) of a corresponding duct portion in such a way that said support (22a, 22b) is positioned above the bottom of said base (13).

2. A continuation accessory according to claim 1 **characterised in that** each support (22a, 22b) has two parallel longitudinal edges (28) and the assembly means (23) that it comprises are groove means provided along a part at least of the length of each of said longitudinal edges (28).

3. A continuation accessory according to claim 2 **characterised in that** each support (22a, 22b) is in the general shape of a plate portion and the groove means forming its assembly means (23) extend in back-to-back relationship on the edge face of its longitudinal edges (28).

4. A continuation accessory according to claim 3 **characterised in that**, along each of the longitudinal edges (28) of each support (22a, 22b), the groove means forming the assembly means (23) that said support (22a, 22b) comprises are formed between two edge portions (29, 30), one being an upper edge portion and the other a lower edge portion, which substantially parallel to each other project laterally outwardly.

5. A continuation accessory according to claim 4 **characterised in that** the upper edge portion (29) is level with the upper surface (31) of each support (22a, 22b) in a relationship of continuity therewith.

6. A continuation accessory according to either one of claims 4 and 5 **characterised in that** each support (22a, 22b) has a dropped edge (34) along each of its longitudinal edges (28) over a part at least of the length thereof and the lower edge portion (30) forms a right-angled flange for such a dropped edge (34).

7. A continuation accessory according to any one of claims 4 to 6 **characterised in that** the edge face of the lower edge portion (30) is bevelled by a chamfer (36).

8. A continuation accessory according to any one of claims 4 to 7 **characterised in that** one at least of the edge portions (29, 30) transversely has in projecting relationship on its internal surface, that is to say on that one of its surfaces which faces towards the other edge portion (29, 30), at least one rib (38).

9. A continuation accessory according to any one of claims 4 to 8 **characterised in that** the edge portions (29, 30) extend only over a part of the length of the longitudinal edges (28) of each support (22a, 22b) and, while overhanging each other over a part at least of their own length, they are displaced longitudinally with respect to each other.

10. A continuation accessory according to any one of claims 1 to 9 **characterised in that** the receiving means (24) on each support (22a, 22b) comprise at least one latching opening (39), by means of which a hooking catch (40) is at least locally operative.

11. A continuation accessory according to claim 10 **characterised in that** the hooking catch (40) is preceded by an engagement chamfer (42).

12. A continuation accessory according to either one of claims 10 and 11 **characterised in that** the latching opening (39) in plan is of a contour which-is elongate in a buttonhole shape substantially parallel to the longitudinal edges (28) of the support (22a, 22b).

13. A continuation accessory according to any one of claims 10 to 12 **characterised in that** the receiving means (24) on each support (22a, 22b) comprise at least two latching openings (39) which are aligned with each other parallel to the longitudinal edges (28) of said support (22a, 22b) and the hooking catches (40) of which are disposed at different levels (N1, N2).

14. A continuation accessory according to claim 13 **characterised in that** there is an alignment of at least two latching openings (39) along each of the longitudinal edges (28) of each support (22a, 22b).

15. A continuation accessory according to any one of claims 1 to 14 **characterised in that** the front transverse edge (33) of each support (22a, 22b) extends obliquely with respect to its longitudinal edges (28).

16. A continuation accessory according to any one of claims 1 to 15 **characterised in that** each support (22a, 22b) comprises a lug (44) in projecting relationship laterally at one at least of the ends of its front transverse edge (33).

17. A continuation accessory according to claim 16 **characterised in that** each support (22a, 22b) comprises in projecting relationship a lug (44) at each of the ends of its front transverse edge (33).

18. A continuation accessory according to either one of claims 16 and 17 **characterised in that** the lug (44) is shaped as a hook.

19. A continuation accessory according to any one of claims 16 to 18 **characterised in that** the lug (24) comprises a right-angled flange (46) along one of its edges.

20. A continuation accessory according to any one of claims 1 to 19 **characterised in that** the upper surface (31) of each support (22a, 22b) extends along two levels, an upper level at the front and a lower level at the rear.

21. A continuation accessory according to any one of claims 1 to 20 **characterised in that** each support (22a, 22b) locally comprises at least one aperture (48).

22. A continuation accessory according to any one of claims 1 to 21 **characterised in that** each support (22a, 22b) comprises at least one notch (49).

23. A continuation accessory according to any one of the preceding claims **characterised in that**, involving an internal angle member with branching, the covering portion (21') comprises three surface portions, namely two end surface portions (25'a, 25'b) and an intermediate surface portion (26).

24. A continuation accessory according to any one of the preceding claims **characterised in that** projecting on the lower surface of each of the end surface portions (25a, 25'a, 25b, 25'b) of the covering portion (21, 21') is at least one latching lug (56) which is elastically deformable and which transversely has a hooking catch (57).

25. A continuation accessory according to claim 24 **characterised in that** projecting on the lower surface of each of the end surface portions (25a, 25'a, 25b, 25'b) of the covering portion (21, 21') are at least two latching lugs (56) which are aligned with each other parallel to the longitudinal edges (58) of such an end surface portion (25a, 25'a, 25b, 25'b) and the hooking catches (57) of which are all disposed at the same level.

26. A continuation accessory according to claim 25 **characterised in that** there is an alignment of at least two latching lugs (56) along each of the longitudinal edges (58) of each of the end surface portions (25a, 25'a, 25b, 25'b) of the covering portion (21, 21').

27. A continuation accessory according to any one of the preceding claims **characterised in that** the two supports (22a, 22b) are symmetrical with each other.

28. A continuation accessory according to claim 23 **characterised in that** associated with the covering portion (21') is an adaptor (12) which, by means of a slot (59) formed by two parallel lips (60), is adapted to be engaged on the intermediate surface portion (26) of said covering portion (21').

29. A continuation accessory according to claim 28 **characterised in that** in its slot (59) the adaptor (12) comprises at least one pad (61) which, carried by an elastically deformable tongue (62), is intended to come to bear against the edge face of the intermediate surface portion (26) of the covering portion (21').

30. A continuation accessory according to either one of claims 28 and 29 **characterised in that** at the back of its slot (59) in projecting relationship on a tongue (69) which borders it over a part at least of its length the adaptor (12) comprises at least one catch (70).

31. A continuation accessory according to any one of claims 28 to 30 **characterised in that** at the back of its slot (59) the adaptor (12) comprises a masking plate portion (71).

32. A continuation accessory according to claim 31 **characterised in that** the masking plate portion (71) of the adaptor (12) comprises a network of pre-cutout lines (72).

33. A continuation accessory according to claims 30 and 31 in combination **characterised in that** the masking plate portion (71) of the adaptor (12) is disposed in line with its tongue (69).

34. A continuation accessory according to any one of claims 1 to 33 **characterised in that**, a plate member (20, 20') for extending between the bases (13) of the different duct portions being provided, said plate member (20, 20') laterally comprises two retaining projections (52).

## Patentansprüche

1. Kabelrinnenverbindungszubehör wie Eckverbindung oder Abzweigung, das dazu bestimmt ist, eine durchgehende Verbindung zwischen mindestens zwei Rinnenabschnitten mit verschiedenen Ausrichtungen herzustellen, die jeweils einen Sockel (13) und einen Deckel (14) aufweisen, wobei dieses Verbindungszubehör eine einstückige Abdeckung (21,21'), die geeignet ist, sich zwischen den Deckeln (14) zu erstrecken, und zwei Halter (22a,22b) aufweist, und zwar einen pro Rinnenabschnitt, wobei jeder dieser beiden Halter (22a,22b) Aufnahmemittel (24) aufweist, die dafür geeignet sind, daran die Anbringung einer Endfläche (25a,25'a,25b,25'b) der Abdeckung (21,21') zu gestatten, **dadurch gekennzeichnet, daß** jeder der beiden Halter (22a,22b) außerdem Montagemittel (23) aufweist, die geeignet sind, ihn durch Aufstecken an den Umbiegungen (18) der Seitenschenkel (16) des Sockels (13) eines entsprechenden Rinnenabschnitts anzubringen, so daß dieser Halter (22a,22b) über dem Boden des Sockels (13) positioniert wird.

2. Verbindungszubehör nach Anspruch 1, **dadurch gekennzeichnet, daß** jeder Halter (22a,22b) zwei parallele Längsränder (28) aufweist und seine Verbindungsmittel (23) Nutmittel sind, die längs mindestens eines Teils der Länge jedes dieser Längsränder (28) vorgesehen sind.

3. Verbindungszubehör nach Anspruch 2, **dadurch gekennzeichnet, daß** jeder Halter (22a,22b) in der allgemeinen Form einer Platte vorliegt und die seine Verbindungsmittel (23) bildenden Nutmittel sich Rücken an Rücken auf der Kante seiner Längsränder (28) erstrecken.

4. Verbindungszubehör nach Anspruch 3, **dadurch gekennzeichnet, daß** die die Verbindungsmittel (23) dieses Halters (22a,22b) bildenden Nutmittel längs jedes der Längsränder (28) jedes Halters (22,22b) zwischen zwei Randabwinklungen (29,30), einer oberen und einer unteren, gebildet sind, die zueinander im wesentlichen parallel sind und seitlich nach außen vorstehen.

5. Verbindungszubehör nach Anspruch 4, **dadurch gekennzeichnet, daß** die obere Randabwinklung (29) mit der Oberseite (31) jedes Halters (22a,22b) bündig ist und an diese anschließt.

6. Verbindungszubehör nach einem der Ansprüche 4,5, **dadurch gekennzeichnet, daß** jeder Halter (22a,22b) längs jedes seiner Längsränder (28) zumindest auf einem Teil ihrer Länge einen abgewinkelten Rand (34) aufweist und die untere Randabwinklung (30) für diesen abgewinkelten Rand (34) eine rechtwinklige Umbiegung bildet.

7. Verbindungszubehör nach einem der Ansprüche 4 bis 6, **dadurch gekennzeichnet, daß** die Kante der unteren Randabwinklung (30) eine Abschrägung (36) aufweist.

8. Verbindungszubehör nach einem der Ansprüche 4 bis 7, **dadurch gekennzeichnet, daß** mindestens eine der Randabwinklungen (29,30) in Querrichtung auf ihrer Innenseite vorstehend, d.h. auf derjenigen ihrer Seiten, die der anderen Randabwinklung (29,30) zugewandt ist, mindestens eine Rippe (38) aufweist.

9. Verbindungszubehör nach einem der Ansprüche 4 bis 8, **dadurch gekennzeichnet, daß** die Randabwinklungen (29,30) sich nur über einen Teil der Länge der Längsränder (28) jedes Halters (22a,22b) erstrecken und, indem sie auf mindestens einem Teil ihrer eigenen Länge übereinander angeordnet sind, in Längsrichtung gegeneinander versetzt sind.

10. Verbindungszubehör nach einem der Ansprüche 1 bis 9, **dadurch gekennzeichnet, daß** die auf jedem Halter (22a,22b) vorgesehenen Aufnahmemittel (24) mindestens eine Einklinkaussparung (39) umfassen, in der mindestens örtlich eine Einhakraste (40) vorgesehen ist.

11. Verbindungszubehör nach Anspruch 10, **dadurch gekennzeichnet, daß** der Einhakraste (40) eine Einführungsschräge (42) vorhergeht.

12. Verbindungszubehör nach einem der Ansprüche 10, 11, **dadurch gekennzeichnet, daß** die Einklinkaussparung (39) in Draufsicht einen im wesentlichen parallel zu den Längsrändern (28) des Halters (22a,22b) langlochartig langgestreckten Umriss aufweist.

13. Verbindungszubehör nach einem der Ansprüche 10 bis 12, **dadurch gekennzeichnet, daß** die auf jedem Halter (22a,22b) vorgesehenen Aufnahmemittel (24) mindestens zwei Einklinkaussparungen (39) aufweisen, die parallel zu den Längsrändern (28) dieses Halters (22a,22b) in einer Linie liegen und deren Einhakrasten (40) auf verschiedenen Höhen (N1,N2) angeordnet sind.

14. Verbindungszubehör nach Anspruch 13, **dadurch gekennzeichnet, daß** es eine Linie von mindestens zwei Einklinkaussparungen (39) längs jedes der Längsränder (28) jedes Halters (22a,22b) gibt.

15. Verbindungszubehör nach einem der Ansprüche 1 bis 14, **dadurch gekennzeichnet, daß** der vordere Querrand (33) jedes Halters (22a,22b) sich schräg zu seinen Längsrändern (28) erstreckt.

16. Verbindungszubehör nach einem der Ansprüche 1 bis 15, **dadurch gekennzeichnet, daß** jeder Halter (22a,22b) an mindestens einem der Enden seines vorderen Querrandes (33) seitlich vorstehend einen Lappen (44) aufweist.

17. Verbindungszubehör nach Anspruch 16, **dadurch gekennzeichnet, daß** jeder Halter (22a,22b) an jedem der Enden seines vorderen Querrands (33) vorstehend einen Lappen (44) aufweist.

18. Verbindungszubehör nach einem der Ansprüche 16, 17, **dadurch gekennzeichnet, daß** der Lappen (44) hakenförmig ausgebildet ist.

19. Verbindungszubehör nach einem der Ansprüche 16 bis 18, **dadurch gekennzeichnet, daß** der Lappen (44) längs eines seiner Ränder eine rechtwinklige Umbiegung (46) aufweist.

20. Verbindungszubehör nach einem der Ansprüche 1 bis 19, **dadurch gekennzeichnet, daß** die Oberseite (31) jedes Halters (22a,22b) sich in zwei Höhen erstreckt, einer oberen Höhe vorne und einer unteren Höhe hinten.

21. Verbindungszubehör nach einem der Ansprüche 1 bis 20, **dadurch gekennzeichnet, daß** jeder Halter (22a,22b) örtlich mindestens eine Ausbrechung (48) aufweist.

22. Verbindungszubehör nach einem der Ansprüche 1 bis 21, **dadurch gekennzeichnet, daß** jeder Halter (22a,22b) mindestens einen Ausschnitt (49) aufweist.

23. Verbindungszubehör nach einem der vorhergehenden Ansprüche, **dadurch gekennzeichnet, daß** die Abdeckung (21'), wenn es sich um einen Innenwinkel mit Abzweigung handelt, drei Flächen aufweist, und zwar zwei Endflächen (25',25') und eine Zwischenfläche (26).

24. Verbindungszubehör nach einem der vorhergehenden Ansprüche, **dadurch gekennzeichnet, daß** auf der Innenseite jeder der Endflächen (25a,25'a,25b,25'b) der Abdeckung (21,21') mindestens ein Einklinklappen (56) vorsteht, der elastisch verformbar ist und in Querrichtung eine Einhakraste (57) aufweist.

25. Verbindungszubehör nach Anspruch 24, **dadurch gekennzeichnet, daß** auf der Innenseite jeder der Endflächen (25a,25'a,25b,25'b) der Abdeckung (21,21') mindestens zwei Einklinklappen (56) vorstehen, die parallel zu den Längsrändern (58) einer solchen Endfläche (25a,25'a,25b,25'b) miteinander in einer Linie liegen und deren Einhakrasten (57) alle in derselben Höhe angeordnet sind.

26. Verbindungszubehör nach Anspruch 25, **dadurch gekennzeichnet, daß** es eine Linie von mindestens zwei Einklinklappen (56) längs jedes der Längsränder (58) jeder der Endflächen (25a,25'a,25b,25'b) der Abdeckung (21,21') gibt.

27. Verbindungszubehör nach einem der vorhergehenden Ansprüche, **dadurch gekennzeichnet, daß** die beiden Halter (22a,22b) zueinander symmetrisch sind.

28. Verbindungszubehör nach Anspruch 23, **dadurch gekennzeichnet, daß** der Abdeckung (21') ein Adapter (12) zugeordnet ist, der mit einem von zwei parallelen Lippen (60) gebildeten Schlitz (59) auf die mittlere Fläche (26) dieser Abdeckung (21') aufgesteckt werden kann.

29. Verbindungszubehör nach Anspruch 28, **dadurch gekennzeichnet, daß** der Adapter (12) in seinem Schlitz (59) mindestens einen Fuß (61) aufweist, der von einer elastisch verformbaren Zunge (62) getragen ist und dazu bestimmt ist, auf der Kante der mittleren Fläche (26) der Abdeckung (21') aufzuliegen.

30. Verbindungszubehör nach einem der Ansprüche (28,29), **dadurch gekennzeichnet, daß** der Adapter (12) am Rücken seines Schlitzes (59) an einer ihn säumenden Lippe (69) auf mindestens einem Teil seiner Länge vorstehend mindestens eine Raste (70) aufweist.

31. Verbindungszubehör nach einem der Ansprüche 28 bis 30, **dadurch gekennzeichnet, daß** der Adapter (12) am Rücken seines Schlitzes (59) eine Abdeckwange (71) aufweist.

32. Verbindungszubehör nach Anspruch 31, **dadurch gekennzeichnet, daß** die Abdeckwange (71) des Adapters (12) ein Netz von Vorstanzlinien (72) aufweist.

33. Verbindungszubehör nach den Ansprüchen 30 und 31 zusammen, **dadurch gekennzeichnet, daß** die Abdeckwange (71) des Adapters (12) in der Verlängerung seiner Zunge (69) liegt.

34. Verbindungszubehör nach einem der Ansprüche 1 bis 33, **dadurch gekennzeichnet, daß**, wenn eine Platine (20,20') vorgesehen ist, die geeignet ist, sich zwischen den Sockeln (13) der einzelnen Rinnenabschnitte zu erstrecken, diese Platine (20,20') seitlich zwei Rückhaltenasen (52) aufweist.
